# EUROPÄISCHE PATENTSCHRIFT

(11) **EP 0 444 048 B1**
(45) Veröffentlichungstag und Bekanntmachung des Hinweises auf die Patenterteilung: **20.04.1994**
(21) Anmeldenummer: 89911051.4
(22) Anmeldetag: 29.09.1989
(51) Int. Cl.: F28D 1/053, F24D 19/06

(54) **FLÄCHIGE TEMPERIERVORRICHTUNG**
FLAT TEMPERATURE-REGULATING DEVICE
DISPOSITIF PLAT DE REGULATION DE LA TEMPERATURE

(30) Priorität: 29.09.1988 AT 2399/88; 03.04.1989 AT 761/89; 15.06.1989 AT 1460/89
(43) Veröffentlichungstag der Anmeldung: 04.09.1991
(73) Patentinhaber: FENNESZ, Manfred, A-1220 Wien (AT)
(72) Erfinder: FENNESZ, Manfred, A-1220 Wien (AT)
(74) Vertreter: Büchel, Kurt F., Dr.
(86) Internationale Anmeldenummer: EP8901143
(87) Internationale Veröffentlichungsnummer: WO9003545

(56) Entgegenhaltungen:
- DE-A- 3 022 006
- FR-A- 2 294 353
- GB-A- 1 107 224
- GB-A- 1 108 155
- US-A- 4 216 823

## Beschreibung

Die Erfindung betrifft eine flächige Temperiervorrichtung nach dem Oberbegriff des Anspruches 1. Als Temperiervorrichtung im Sinne der Erfindung ist ein Kühl- oder Heizelement zu verstehen, wobei in Mitteleuropa in der Regel insbesondere ein Heizkörper damit gemeint ist, der elektrisch oder durch ein Wärmeleitmedium mit Heizenergie versorgbar ist und diese Heizenergie in den Raum abgibt.

Ein schon länger bekanntes Modell eines solchen Heizkörpers ist z.B. unter dem Namen Thermoboard der Firma Thermco AG bekannt geworden. Das Heizelement besteht dort aus einem Vor-und Rücklauf aus Kupferrohr mit axial aufgepressten Aluminium-Thermoleitblechen. Diese Heizelemente sind mittels schnabelförmiger Haltevorrichtungen, die an einer Wand angebracht sind, im Abstand zu dieser Wand gehalten. Zum Schutz der Wärmeleitbleche und zur Erzielung einer Kaminwirkung ist das Heizelement an seiner der Wand abgewandten Seite durch ein Abdeckprofil abgedeckt. Ein ähnlicher Heizkörper ist in der GB-A-1108155 beschrieben. Der Nachteil dieser Lösung liegt in einer relativ komplizierten Lagerung, einem schwierigen Transport und komplizierten Zusammenbau. Auch kann sich die Abdeckung im Laute der Zeit unter thermischen Spannungen lösen.

Durch die Kaminwirkung zwischen dem Abdeckprofil und der Wand kommt es zu einem Vorbeistreichen der Luft an den Wärmeleitlamellen, was zu einer Wärmeabgabe durch Konvektion führt. Im nur geringen Mass wird auch das Abdeckprofil bzw. Abdeckblech selbst gewärmt und strahlt etwas Wärme in den Raum. Diese Strahlungswärmeabgabe ist jedoch nach dem heute geforderten hohen Mass an Strahlungswärme zu gering, so dass bei einer Weiterentwicklung des bekannten Heizkörpers eine Kachelheizleiste geschaffen wurde, die an Stelle des Abdeckbleches ein keramisches Strahlband vorsieht, das mit den seitlichen Kanten der Wärmeleitbleche verklebt ist. Diese Konstruktion erlaubt ein gutes Verhältnis von Konvektions- zu Strahlungheizleistung. Die von der Kachel abgestrahlte Wärme ist vergleichbar mit der eines Kachelofens.

Nachteilig ist bei dieser Entwicklung jedoch die Notwendigkeit des Verklebens der Wärmeleitlamellen mit den Kacheln. Dies führt zu einer schlechten Auswechselbarkeit der Kacheln im Falle einer Beschädigung, die ja im Fussleistenbereich nur allzu leicht entstehen kann, sowie im Falle eines gewünschten Designwechsels an der Abdeckung.

Bei grossen Heizleistungen wirkt sich der unterschiedliche Wärmeausdehnungskoeffizient der Kacheln und der Metallteile negativ aus, wodurch es zu Verspannungen, thermisch bedingten Rissen, Geräuschen und Verwerfungen kommen kann. Darüber hinaus ist eine solche Kachelheizleiste im Bereich der Lamellen nur sehr umständlich zu reinigen, da das Kachelstrahlband den Zugang zu den dahinterliegenden Bauteilen des Heizkörpers beschwert, so dass es mit der Zeit zu Staub und Bakterienablagerungen kommen kann, die die Heizleistung vermindern und sogar zu Geruchsbelästigungen fuhren können.

Die Erfindung stellt sich daher die Aufgabe, eine flächige Temperiervorrichtung zu schaffen, die alle oben erwähnten Nachteile vermeidet, einfach montierbar und transportierbar sowie lagerbar ist, weiters das problemlose Auswechseln bzw. Abnehmen der Abdeckungen erlaubt und gegebenenfalls sogar für den Selbstbau geeignet sein soll. Diese Aufgabe wird durch die Merkmale des Anspruches 1 gelöst.

Wesentlich ist das erfindungsgemässe Trägermodul der Haltevorrichtung, das als Rahmenkonstruktion oder Profilplatte ausgebildet ist. Damit ist eine einfache Montage der Temperiervorrichtung möglich, wobei vorher alle Teile problemlos gelagert und transportiert werden können. Als Abdeckung können alle gewünschten Materialen, in erster Linie keramische oder mineralische, aber auch metallische oder solche aus Holz oder Kunststoff verwendet werden, wobei letztere natürlich nicht der Abgabe von Strahlungswärme, sondern in erster Linie nur der Kaminbildung und Verzierung dienen. Die Abdeckungen können ohne Demontage der Temperierelemente abgenommen und z.B. ausgetauscht werden, so dass sie z.B. neuen stilistischen Gegebenheiten im Raum angepasst werden können. Die Montage der Temperierelemente am Trägermodul bringt gegenüber dem bekannten ausserdem den Vorteil, dass ein eventueller Wärmeabfluss über die Haltevorrichtung in der Wand reduziert ist. Das Trägermodul selbst kann allerdings mit herkömmlichen Halterungen so wie bei bekannten Heizungen an der Wand befestigt werden.

In den meisten Fällen wird das Trägermodul auch gleichzeitig als Wärmeleitmodul zwischen Temperierelement und Abdeckung dienen.

Besondere Ausbildungen der Erfindung sind in den abhängigen Ansprüchen beschrieben. Deren Effekte und Vorteile ergeben sich aus dem Folgenden und aus der Figurenbeschreibung.

Eine extrudierte Profilschiene z.B. aus Aluminium ermöglicht über ihre gesamte Fläche einen guten Wärmeübergang auf die Abdeckung. Alle erforderlichen Ausbildungen für die Befestigung können einstückig ausgebildet werden, so dass die Montage besonders einfach ist und nur wenige Bauteile erforderlich sind. Das Anpassen an örtliche Gegebenheiten ist durch das Ablängen der Profilschiene vor Ort sehr leicht möglich. Eine erfindungsgemässe Profilschiene könnte auch hohl sein, wobei vorzugsweise Stege zur Wärmeleitung den Hohlraum durchsetzen. Dadurch wäre ein besonders stabiles Trägermodul gegeben. Besonderst schmale Ausführungen können aber auch aus gewalztem Formblech aufgebaut sein.

Eventuell kann die Profilschiene auch selbst Kanäle für ein Wärmeleitmedium aufweisen und derart mit dem Heizelement integriert sein.

Eine Rahmenkonstruktion ermöglicht eine besonders platzsparende Anordnung der Temperiervorrichtung, zumal das Temperierelement dann innerhalb des Rahmens gehalten werden kann. Metallrahmen bieten eine gute Stabilität, während Kunststoffrahmen etwas mehr temperaturempfindlich sind, jedoch ein elastisches Befestigen der gesamten Temperiervorrichtung ermöglichen. Wärmedehnungen könne so elastisch und geräuschlos aufgefangen werden.

Die Rahmenteile können unterschiedlich dick sein. Insbesondere die vertikalen, seitlichen Rahmenteile können breiter als die oberen und unteren sein und derart allfällige Temperierelemente seitlich gegen Sicht abdecken. Es kann aber auch auf die seitlichen Rahmenteile überhaupt verzichtet werden, so dass Abdeckung und Temperierelement nur von zwei Leisten gehalten sind, die eventuell mit einem der beiden Elemente auch verklebt sein können. Rahmen- oder sonstige Teile aus Kunststoff sind bevorzugt glasfaserverstärkt, da sich dadurch gute Stabilität und geeignete Wärmedehnungskoeffizienten einstellen lassen.

Die lichte Weite solcher Rahmen kann herstellungstechnisch auch einfach mit einer wärmeleitenden oder -speichernden Vergussmasse aus zementgebundenen Mineralstoffen ausgegossen werden, so dass der Zugriff der Befestigungen auf den Rahmen erfolgt, die Wärmeleitung jedoch über die keramische oder mineralische Platte. Die Platte könnte auch ohne Rahmen ausgebildet sein, jedoch führt dies bei manchen Materialien zu einer erhöhten Bruchgefährdung im Befestigungsbereich. Die Platte kann auch als Ganzes vorgefertigt sein oder einen Sandwichaufbau aufweisen. Ea können dort auch Heiz- oder Kühlstäbe oder -folien miteingegossen sein, so dass das Trägermodul mit dem Temperierelement integriert ist. Rahmen und Platte sind in der Regel elastisch verklebt, um Dehnungen auszugleichen. Hohlräume im Rahmen sind vorzugsweise mit Vorsprüngen oder Nuten versehen, die die Platte verkrallen.

Verbleibende Hohlräume im Rahmen können elastisch gefüllt sein, um eventuelle Relativverschiebungen zwischen Rahmen und Platte zu ermöglichen.

Eine der Varianten für die Anbringung der Abdeckung auf einem solchen letzt beschriebenen Trägermodul ist das Aufkleben von Fliessen - z.B. im Selbstbauverfahren -, der bei Bedarf wieder heruntergestemmt und durch neue ersetzt werden können. Beim herkömmlichen Modell ist ein Ablösen der Kacheln nur mit gleichzeitiger Beschädigung der Lamellen möglich. Bevorzugt wird die Abdeckung nach den Merkmalen des Anspruches 3 am Trägermodul gestaltet.

Vorsprünge oder Nuten sind bei der Herstellung der Trägermodule sowie bei Herstellung der Abdeckungen leicht vorzusehen. Sie sind vorzugsweise an der oberen und unteren Kante des Trägermoduls vorgesehen, können aber auch an den seitlichen Kanten ausgebildet sein, wo sich allerdings die Schwerkraft störend bei der Montage auswirkt; die Bauteile können leicht nach unten aus den Vorsprüngen bzw. Ausnehmungen gleiten. Besonders dem unteren Bereich sind bei Vorsprüngen, die in Ausnehmungen der Abdeckung eingreifen vertikale Stützflächen am Trägermodul für die Abdeckung nötig, da Stösse auf die Abdeckung durch das Trägermodul abgefangen werden sollen, um die Bruchgefahr bei der Abdeckung - vor allem im Bereich der materialschwächenden Nuten - zu verringern. Die Montage solcher Trägermodule ist vorort und einfach und logisch übersichtlich. Ein enges Anliegen vom Trägermodul und Abdeckung ist sichergestellt, was zu einer guten Wärmeübertragung führt. In Fällen, bei denen ein Wärmeisolator als Abdeckung vorgesehen ist, sind die Vorsprünge bzw. Ausnehmungen so vorspringend, dass die Abdeckung mit Ihrer vertikalen handseitigen Fläche - zumindest geringfügig - von dem Trägermodul beabstandet ist. Vorzugsweise ist je doch bei jedem Vorsprung auch eine vertikale Stützfläche für die Abdeckung bzw. das Temperierelement vorgesehen, um Biegebeanspruchungen zu reduzieren.

Verschiedene Ausführungen wurden nach Anspruch 4 für unterschiedliche Anwendungsfälle vorgesehen. Die Ausbildung nach
A ermöglicht das Einschieben der Abdeckung auf das Trägermodul, das die schnellste Art der Montage ist. Die Ausbildung nach
B ermöglicht einem Monteur das Absetzen und Anpassen der Abdeckung auf dem Trägermodul. Die Ausbildung nach
C dient der spielfreien Vertikalführung von Häuteklammern, wodurch Montageverspannungen vermieden werden. Die Ausbildung nach
D ermöglicht designgerechtes Abdecken der Oberseite des Trägermoduls und gegebenenfalls der Abdeckung. Zur beliebigen Höhenvariation etwa im Zusammenhang mit der Wahl von unterschiedlich dimensionierten Fliessen für die Abdeckung kann diese Oberseite auch L-förmig ausgebildet sein, so dass man dort bei Bedarf auch einen L-förmigen Stützwinkel einlegen kann. Der vertikale Schenkel des Stützwinkels dient dann als Anlagefläche für die Fliessenteile an der Oberseite der Temperiervorrichtung. Alternativ kann aber anstelle des vertikalen Schenkels des L's auch eine durchgehende Nut vorgesehen sein, in die ein vertikales Stützblech für die Abdeckung eingesetzt werden kann. Dieses Stützblech übernimmt dann die Funktion des vertikalen Winkelschenkels. Die Ausbildung nach
E dient wie nach C der Reduktion allfälliger Montageverspannungen. Die Ausbildung nach
F stellt zusammen mit jener nach B eine Variante für einfache Montage dar, wobei die Abdeckung für eine Schraube durchbohrt sein muss. Diese Variante ist nicht bevorzugt, da die Vorfertigung der Bohrlöcher am richtigen Ort schwierig ist und viele Abdeckungsmaterialien nur problematisch durchbohrt werden können. Insoferne ist auch eine Befestigung der Abdeckung mittels einer Klemmverbindung entsprechend den Merkmalen des Anspruches 5 von Vorteil. Eine solche Klemmvorrichtung hält die Abdeckung gewissermassen unsichtbar, obwohl sie selbst bei der Montage leicht zugänglich ist. Als Alternative sind alle Klemmvorrichtungen mit Spreizklemmung denkbar.
   Entsprechend dem Anspruch 6 sind dafür verschiedene Varianten bzw. Ausbildungen möglich, wobei die nach
A sehr rasch - lediglich durch Aufschnappen - zu montieren geht; jene nach
B eine sehr stabile dauerhafte Verbindung garantiert; jene nach
C und F die Gefahr einer unerwünschten Montageverspannung reduziet; jene nach
D mit nur zwei Teilen (einem Haken und einer Schraube) auskommt, wobei bei dieser Ausbildung jedoch der Zwang zur Festlegung der Gewindebohrungen in bestimmten Abständen oder erst vor Ort als Nachteil auftritt; und jene nach
E in die richtige Position gebracht werden können.

Als Temperierelement können sämtliche bekannten flächigen Heiz- oder Kühlelemente verwendet werden, wobei die Energiequelle und das gewünschte Verhältnis von Konfektions- und Strahlungsheizleistung ausschlaggebend für die Wahl der Elemente sind. Bei allen Fallen von Heiz- oder Kühlelementen mit einem Wärmeleitmedium werden die Elemente an der der Wand zugewandten Seite des Trägermoduls befestigt.

Dabei können die an ansich bekannten Verfahren, wie z.B. das stirnseitige Ankleben von Wärmeleitlamellen in einem Kunstharz- oder zementgebundenen Kleber an die wandseitige Fläche des Trägermoduls erfolgen. Bei einem Trägermodul aus Blech können die Wärmeleitlamellen mit diesem auch integriert sein, so dass bei der Montage der Temperiervorrichtung Heiz-Kühlrohre in das integrierte Trägermodul eingeschoben werden können. Unter Umständen könnte sogar die Abdeckung selbst, die mit dem Trägermodul bzw. mit einem Rahmenaufbau desselben integriert ist, geeignete Hohlräume für das das Einbringen von Wärmeleitmedien aufweisen. Insbesondere wenn Heiz- oder Kühlvorrichtungen im mineralischen, stranggepressten oder keramischen Trägermodul verlegt sind, kann die wandseitige Ausbildung derselben auch wellen- oder rippenförmig sein, wodurch die Konvektionswärmeabgabe an dieser Seite erhöht wird. Es können dort auch Wärmeleitbleche zur Übertragung von Wärme aus dem Trägermodul für die Konvektionswärmeabgabe vorgesehen sein.

Besonders vorteilhaft können nach Anspruch 9 auch mehrere Temperierelemente miteinander gekoppelt werden; z.B. können zwei folienartige, elektrische Heizelemente vorgesehen sein, die einzeln und gemeinsam einschaltbar sind. Für eine Übergangsheizperiode können auch elektrische Heizelemente mit Warmwasserelementen gekoppelt werden.

Es ist auch denkbar, elektrische Heizelemente im Siebdruckverfahren auf das Trägermodul aufzubringen.

Andererseits ist entsprechend dem ersten Merkmal des Anspruches 7 auch eine an sich herkömmliche, schnabelförmige Haltevorrichtung für das Temperierelement vorgesehen, die im Gegensatz zum bekannten nicht an der Wand, sondern am Trägermodul befestigt ist und derart das Temperierelement flächig an das Trägermodul presst. Gegebenenfalls kann dieses Anpressen auch durch eine Haltevorrichtung für das Trägermodul erfolgen, die einerseits an der Wand befestigt bzw. befestigbar ist und andererseits das Trägermodul hält bzw. an sich klammert. Zwischen dem wandseitigen Bereich der Haltevorrichtung und dem Trägermodul kann dann das Temperierelement angebaut sein, wodurch bei der Montage des Haltemoduls gleichzeitig auch das Temperierelement fixiert und an dieses gepresst wird.

Bei der Verwendung eines folienartigen Temperierelementes ist vorgesehen, dieses entweder direkt - z.B. durch Eingiessen - im Trägermodul zu integrieren oder entsprechend dem Anspruch 8 zwischen dem Trägermodul und der Abdeckung einzuklemmen, wodurch ein sehr guter Wärmeübergang auf die Abdeckung gewährleistet ist und insgesamt sehr flach gebaut werden kann. Bei solchen Konstruktionen wird das Schwergewicht auf die Strahlungswärmeabgabe gelegt, wobei an der Wandseite des Trägermoduls auch Wärmeleitlamellen zur Abgabe von Konvektionswärme vorgesehen sein können. Das letzte Merkmal des Anspruches 8 erleichtert das Montieren, da die Temperierfolie lediglich in die Schlitze eingeschoben werden muss, um an dem Trägermodul gehalten zu werden. Die Schlitze können aus dem vollen Material des Trägermoduls gebildet sein, oder auch durch nachträgliches Montieren eines Formwinkels oder einer Platte gebildet werden.

Das Trägermodul ist durch Halteelemente aus Profilmaterial nach den Merkmalen des Anspruches 10 an der Wand gehalten. Theoretisch können dafür beliebige, herkömmliche Halterungen vorgesehen werden, jedoch sind solche mit den Ausbildungen nach den Merkmalen des Anspruches 11 vorteilhaft. Die dort bezeichneten Varianten zeigen folgende Eigenschaften:
A der Fuss erleichtert die Montage in richtiger Relativhöhe zum Fussboden ohne aufwendiges Messen und stützt auch nach der Montage das Gewicht der Temperiervorrichtung;
B das Einschieben oder Einschnappen der Halterungen in eine Wandhalterung ist sehr rasch bewerkstelligt und ermöglicht das seitliche Justieren der Halterungen ohne Komplikationen. Eine Wandverkleidung ist bei bekannten Heizleistungssystemen zwar bekannt, jedoch bringt deren zusätzliche Funktion als Wandhalterung in Kombination mit einer Wärmereflexionsleistung eine sinnvolle Ergänzung;
C als stranggepresstes oder extrudiertes Material sind die Halterungen entsprechend kostengünstig herstellbar, wobei die Ösen für die Kabelführung eine Montageerleichterung sind und allfällige Installationskabel gut versteckt werden können;
D die zangenförmige Hakenanordnung ist ähnlich wie bei der Halterung der Abdeckung eine dauerhafte, leicht zu montierende Konstruktion, wobei die Merkmale von
E die Abstützung beabstandet das Trägermodul zum Fussboden.
F verhindern, dass ein allfällig dünnes Trägermodul durch den Montagespanndruck gebogen wird. Die Zapfen, Leiste od.dgl. bewirken, dass zwischen oberem Klemmteil und unterer Abstützung oder auch unterem Haken keine durchgehende Druckspannung das Trägermodul belastet. Eine solche Vorrichtung kann auch für die Abdeckung vorgesehen sein, wird dort in der Regel aber wegen der ausreichenden Steifigkeit derselben nicht benötigt;
Anstelle von Klemmbefestigungen ist es auch denkbar, schwalbenschwanzartige oder ähnliche Profilverbindungen vorzusehen, bei denen das Trägermodul lediglich auf die Halterungen aufgeschoben wird.

Die Merkmale des Anspruches 12 ermöglichen einen formschönen Abschluss der Temperiervorrichtung, wobei das Luftleitblech einen direkten Wandkontakt der aufsteigenden Warmluft verhindert. Dadurch kann erstens Energie gespart werden, und zweitens werden Staubablagerungen an der Wand verhindert.

Zur Verringerung allfälliger Dehnungsspannungen und eventueller Geräuschentwicklungen können alle zusammengesetzten Teile an ihren Berührungsstellen mittels Graphitgleitpaste od.dgl. gleitfähig gemacht sein.

Anhand der Zeichnung soll die Erfindung beispielhaft näher erläutert werden. Es zeigen dabei
- Fig.1: eine erfindungsgemässe Temperiervorrichtung in Explosionsdarstellung geschnitten;
- Fig.2: eine Variante eines Trägermoduls für elektrische Folienheizung;
- Fig.3: ein Detail aus Fig.1 für die Verbindung zwischen Trägermodul und Abdeckung;
- Fig.4: eine Variante zum Trägermodul nach Fig.2;
- Fig.5: eine Variante zur Temperiervorrichtung nach Fig.1 ohne Wandhalterung;
- Fig.6: ein Detail der Fig.5 zur Befestigung des Trägermoduls;
- Fig.7: eine Schrägansicht auf eine erfindungsgemässe Temperiervorrichtung;
- Fig.8,8a,8b,: sowie 9,10,10a Varianten für eine Rahmenkonstruktion an einem Trägermodul;
- Fig.11: einen Ausschnitt aus einem Trägermodul mit integriertem Temperierelement;
- Fig.12: eine Variante zum rahmenförmigen Trägermodul;
- Fig.13: ein rahmenförmiges Trägermodul mit integrierter Platte und eingegossenem Temperierelement;
- Fig.14a und b: Varianten einer Rahmenausbildung für ein Trägermodul zum Selbstbau-Fliesenverlegen;
- Fig.15: eine Variante mit einer fächerförmigen Abdeckung der Oberseite der Temperiervorrichtung;
- Fig.16: eine Variante mit blechförmigem Trägermodul;
- Fig.17: ein Detail einer Variante zur Abstützung des Trägermoduls durch ein Halteelement;
- Fig.18: ein Detail zu einer Variante einer Wandhalterung mit abnehmbarer Abdeckung und
- Fig.19: eine Variante einer Abdeckung aus Holz o.dgl., die das Trägermodul ersetzt.

Die Figuren sind zusammenhängend beschrieben. Gleiche Teile haben gleiche Bezugszeichen, ähnliche Teile haben gleiche Bezugszeichen und unterschiedliche Indizes. Die Figuren und deren Beschreibung verstehen sich ausschliesslich beispielhaft.

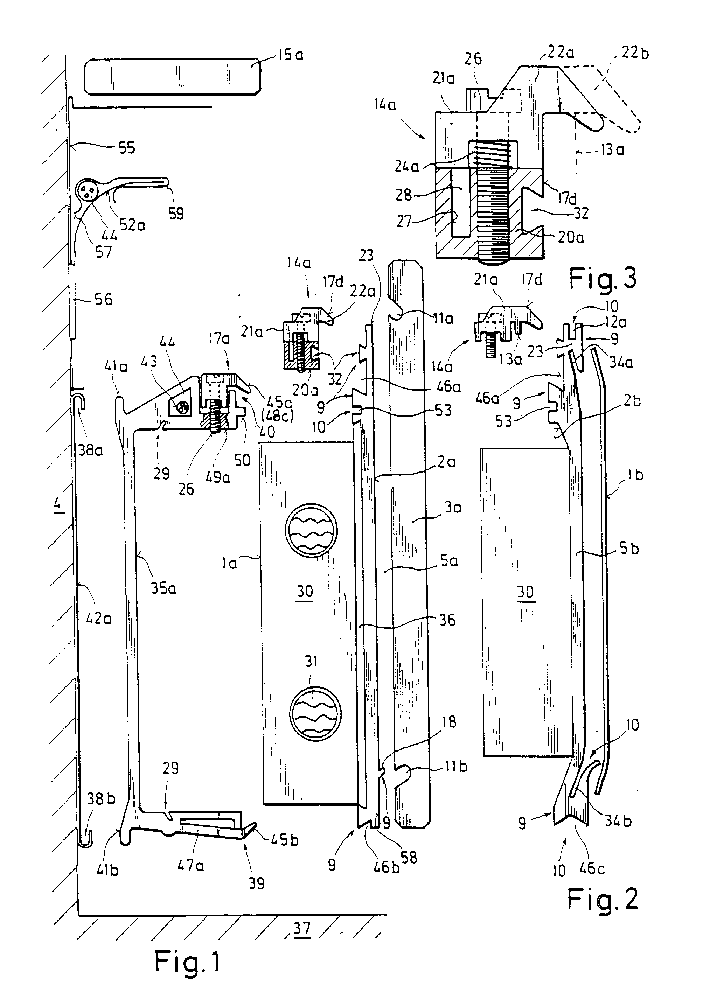

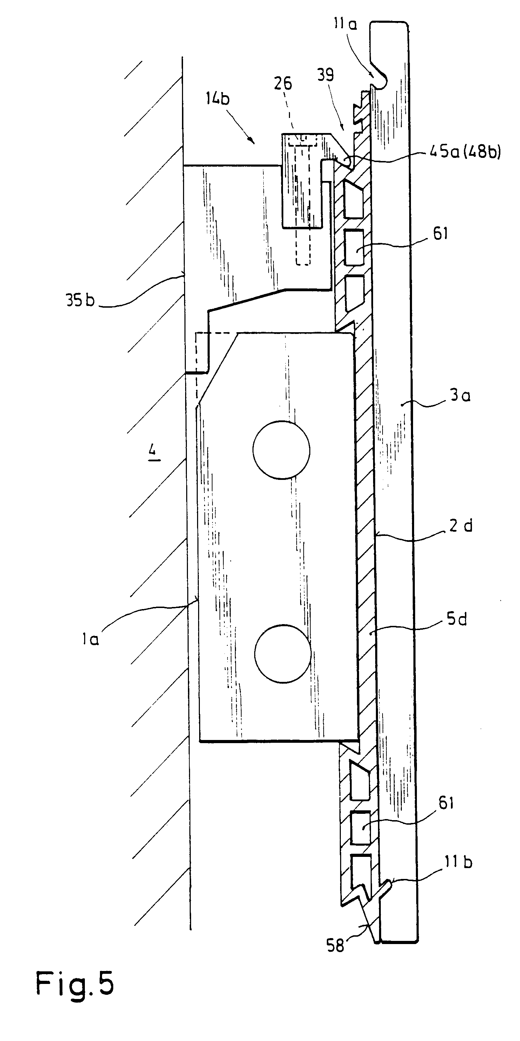

In der explodierten Darstellung der Fig.1 sind die wesentlichen Bauteile der Erfindung deutlich zu sehen. An einer Wand 4 befindet sich eine schienenförmige Wandhalterung 42a, die über zwei Ausnehmungen 38a und b verfügt, die durch Haken gebildet sind. Zwischen der Wandhalterung 42a und der Wand 4 ist üblicherweise eine Isolation vorgesehen.

Zwischen einem Luftleitblech 52a und der Wand 4 bzw. einem Teil der Wandhalterung 42a ist eine Tasche 56 vorgesehen, die für das Einschieben einer abgewinkelten Abdeckung 55 dient. Die Abdeckung 55 bildet zwischen sich und dem Luftleitblech 52a einen Kabelkanal 57, der Leitungen 44 aufnimmt.

Die Leitungen 44 sind dort mit einer Halteklammer 59 punktförmig festgeklemmt. Die Abdeckung 55 stützt eine obere Abdeckung 15a, die im Zusammenhang mit der vorderseitigen Abdeckung 3a der Temperiervorrichtung eine optische Einheit bildet und gegebenenfalls auch wärmespeichernd oder wärmeabstrahlend wirkt.

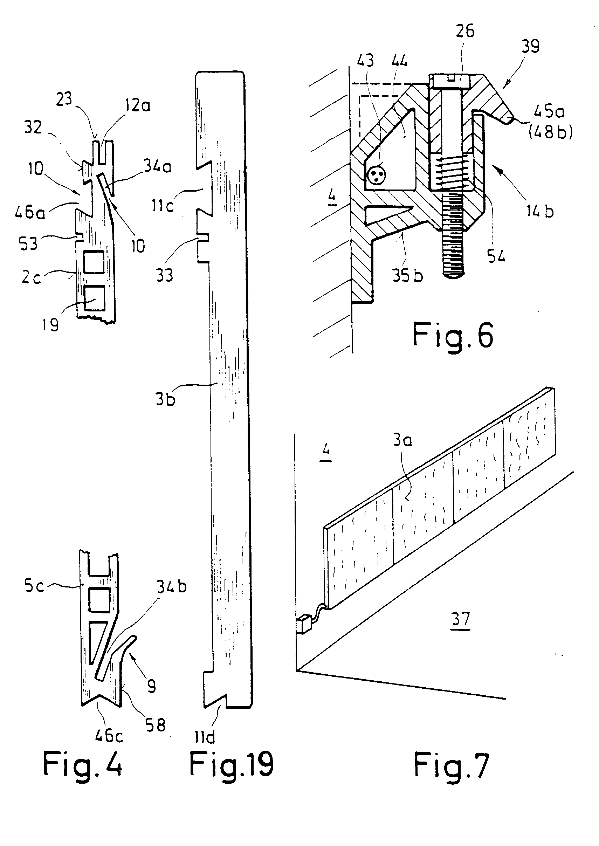

In den Ausnehmungen 38 der Wandhalterung 42a sind im montierten Zustand Vorsprünge 41a bzw. b eines Halteelementes 35a, das im Schnitt gesehen C-förmig ausgebildet ist. Im oberen Balken des C befindet sich eine Öse 43, die ebenso Leitungen 44 halten kann. Daneben ist ein Halteteil 49a mit einem waagrecht vorspringenden Steg 50 vorgesehen, welcher in eine Parallelnut 53 in einem Trägermodul eingreift. Der Halteteil 49a verfügt ebenso über eine Gewindebohrung, die eine Schraube 26 aufnimmt. Die Schraube 26 wirkt vorzugsweise gegen eine nicht dargestellte Feder 54 (vgl. Fig.6) und spannt im montierten Zustand einen Klemmteil 48a mit einem Haken 45 gegen den Halteteil 49a. Zwischen dem Haken 45a und dem Steg 50 verbleibt eine Ausnehmung 40, die mit einem schwalbenschwanzförmigen Vorsprung 9, der als Trägermodul 2a wirkenden Profilschiene 5a zusammenwirkt. Wird die Schraube 26 in Spannrichtung angezogen, so klemmt der Haken 45a den Vorsprung 9 fest. Durch den Steg 50 und die Parallelnut 53 ist die Weitergabe der Spannung vom Haken 45a auf den unteren Teil des Trägermoduls 2a verhindert, die sonst die Profilschiene 5a unter Umständen biegen könnte.

Im unteren Bereich des C befindet sich eine Abstützung 47a mit einem Haken 45b an einem Vorsprung 39 des Halteelementes 35a. Diese Abstützung 47a nimmt den unteren Teil des Trägermoduls 2a auf. Letzteres ist unten - z.B. wie gezeigt - mit einem schwalbenschwanzförmigen Vorsprung 9 versehen, der an sich eine weitere Ausnehmung 46b freilässt, in die der Haken 45b eingreift. Bei der Montage kann das Trägermodul einfach auf den Vorsprung 39 aufgesetzt und anschliessend in Vertikallage geschwenkt werden, bis der Vor- sprung 9 im oberen Teil mit dem Klemmelement 17a in Verbindung kommt.

Am Ende der Querbalken des C befinden sich Nuten 29, die für den fallweisen Einsatz von Montageklammern verwendet werden können. Alternativ sind dort auch Nocken denkbar. Das Halteelement 35a dient der Halterung des Trägermoduls 2a bzw. der Profilschiene 5a. Diese selbst hält an ihrer der Wand 4 zugewandten Seite ein Temperierelement 1a, das aus Wärmeleitlamellen 30 besteht, durch die obere und untere Rohre 31 eingeschoben sind. Dabei handelt es sich also um einen Wärmetauscher, der sowohl für Heiz- als auch für Kühlzwecke angewendet werden kann.

Die Wärmeleitlamellen 30 sind an ihrer Stirnseite durch einen Kleber 36 oder durch eine nicht dargestellte Klemmhalterung mit der Profilschiene 5a verbunden. Die Profilschiene 5a selbst leitet die Wärme des Temperierelementes 1a auf die Abdeckung 3a, die flach an ihr anliegt und durch eine Halteklammer 14a an sie gepresst gehalten wird. Zur besseren Warmeleitung kann zwischen Schiene 5a und Abdeckung 3a eine wärmeleitende Kontaktschicht aufgetragen sein.

Die Abdeckung 3a stützt sich über eine Nut 11b auf einen hakenförmigen Stützsteg 18, der als Vorsprung 9 von der Profilschiene 5a in Richtung Abdeckung 3a abragt. Im oberen Bereich der Abdeckung 3a verfügt diese über eine schräg nach unten gerichtete Nut 11a, in die im montierten Zustand ein krallenförmiger Vorsprung 22a der Halteklammer 14a eingreift. Der krallenförmige Vorsprung 22a ist Teil eines Klemmelements 17d, das aus einem Teil 20a mit einer Gewindebohrung und aus einem Teil 21a mit dem krallenförmigen Vorsprung 22a besteht, wobei die beiden Teile 20a und 21a von einer Schraube 26 (vgl. Fig.3) zusammenspannbar sind. Der Teil 20a verfügt über eine schwalbenschwanzförmige Nut, die zusammen mit einem schwalbenschwanzförmigen Vorsprung des Trägermoduls 2a eine Schwalbenschwanz-Nut-Federführung 32 bildet. Wesentlich bei dieser Führung ist die Aufnahme von Zug- und Druckkräften. Es können daher auch anders geformte Nut-Feder-Führungen vorgesehen sein, aber auch z.B. Federschnapper.

Die beiden Teile 20a und 21a der Halteklammer 14a werden durch eine Feder 24 (Fig.3) auseinander gedrückt gehalten. Das Zusammenschrauben der Teile bewirkt, dass die Abdeckung 3a gegen den Abstützsteg 18 gedrückt und somit fixiert wird. Die keilförmige Schräge der Nuten 11a und 11b bewirkt zusammen mit den Ausbildungen des Steges 18 und des Vorsprungs 22a ein klammerndes Verspannen der Abdeckung 3a auf dem Trägermodul 2a. Unter dem Abstützsteg 18 befindet sich eine plane Abstützfläche 58 für die Unterkante der Abdeckung 3a, die die Bruchgefahr im Anstossfalle reduziert.

Wie aus Fig.3 besser gesehen werden kann, ist der Teil 20a ausser mit einer Gewindebohrung auch mit einer Bohrung oder mit einer Nut 27 versehen, in die ein Zapfen oder Steg 28 des anderen Teiles 21 eingreift. Durch 27 und 28 ist eine exakte Parallelführung der Teile 20a und 21a zueinander gewährleistet. Diese Parallelführung kann in bezug auf das Trägermodul 2b oder 2c (Fig.2 oder 4) noch dahingehend verbessert werden, dass am Vorsprung 22b ein weiterer Führungssteg 13a ausgebildet ist, der in eine gegengleiche Führungsnut 12a am Trägermodul 2b oder 2c eingreifen kann (siehe Fig.2 und 3, strichliert gezeichnet).

Die gleichen Bezugszeichen mit unterschiedlichen Indizes in den anderen Figuren werden nur mehr im Zusammenhang mit unterschiedlichen Ausbildungen und unterschiedlichen Effekten beschrieben, da sie ansonsten einem Fachmann verständlich sind.

Fig.2 zeigt, dass an dem Trägermodul 2b verschiedenste Vorsprünge 9 und Ausnehmungen 10 vorhanden sein können, die z.B. im Bereich der Oberkante 23 des Trägermoduls 2b die Führungsnut 12a bilden.

An der der Abdeckung zugewandten Seite des Trägermoduls 2b befinden sich Schlitze 34a und b, die einem Biegeradius eines folienartigen Temperierelementes 1b entsprechend in die Profilschiene 5b eingebracht sind. Das Temperierelement 1b ist z.B. eine Kohlefaserheizmatte. Der obere Schlitz 34a ist vorzugsweise tiefer als der untere, um ein reversierendes Einschieben des Temperierelementes 1b zu ermöglichen.

Die weitere Ausnehmung 46c im unteren Bereich ist bewusst schräg geformt, um im Zusammenwirken mit einem Haken 45 das Verspannen mit einer Halterung zu ermöglichen. An der der Wand 4 zugewandten Seite des Trägermoduls 2b befinden sich Wärmeleitlamellen 30, die die Konvektionswärmeabgabe aus dem Temperierelement 1b über die Profilschiene 5b ermöglichen sollen. Anstelle der Wärmeleitlamellen 30 könnte auch eine komplette Temperiereinrichtung entsprechend der Fig.1 vorgesehen sein, so dass das Temperierelement nach Fig.2 sowohl elektrisch als auch mittels Warmwasser beheizt werden könnte.

In Fig.4 ist ein Trägermodul 2c dargestellt, das in seinem Inneren Kanäle 19 aufweist, die durch Stege 60 gebildet sind. Die Stege 60 bewirken die Wärmeleitung zwischen den Seitenflächen der Profilschiene 5c. In den Kanälen 19 könnte auch ein Wärmeleitmedium geführt sein. Dann könnten die Kanäle auch zusammengesetzt sein, so dass z.B. nur zwei grosse Kanäle ausgebildet sind, von denen einer für den Vorlauf und der andere für den Rücklauf dient.

Anstelle der Abdeckung in der Ausbildung entsprechend den Fig.1,2 und 4 könnte beispielsweise auch gleich eine Abdeckung 3b gemäss Fig.19 vorgesehen sein, die ebensolche Ausnehmungen und Vorsprünge aufweist, wie die Trägermodule an der Wandseite. Solche Ausbildungen sind vorzugsweise aus Holz o.dgl.

Fig.6 zeigt eine Variante als Wandhalterung 35b, die vor allem für hohe Temperiervorrichtungen vorgesehen ist, da sie zweigeteilt ist und im beliebigen Abstand zu einem allfälligen, nicht gezeigten Abstützteil 47 an der Wand 4 befestigbar ist. Im Gegensatz zum Klemmelement 17a der Fig.1 ist bei der Halteklammer 14b nach Fig.6 keine Horizontalsteg vorgesehen.

Die Variante nach Fig.5 zeigt eine etwas geänderte Profilschiene 5d, die im oberen und unteren Bereich Teilhohlräume 61 aufweist.

Aus Fig.7 ist eine fertig montierte Temperiervorrichtung aus mehreren zusammengestzten Modulen an einer Wand 4 zu erkennen, die in einem relativ hohen Abstand zum Fussboden 37 montiert ist. Halteklammern oder Schrauben o.dgl. sind weder an der Front noch an den Kanten zu sehen.

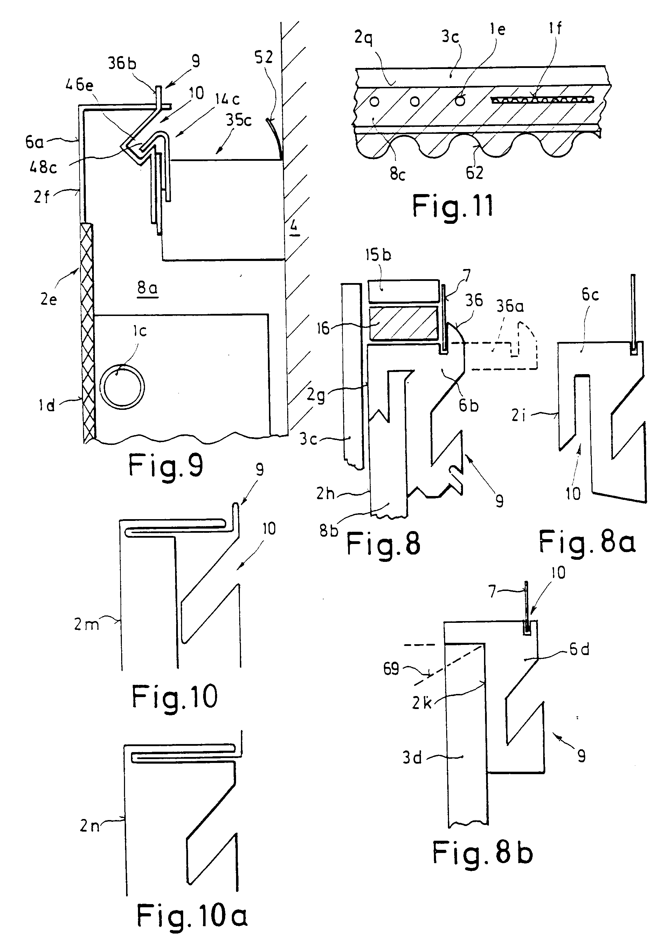

Aus Fig.8 ist ein Querschnitt durch eine Rahmenkonstruktion 6b zu sehen, die z.B. aus glasfaserverstärktem Kunststoff gebildet ist und in ihrer lichten Durchgangsweite eine Platte 8b aus wärmespeicherndem, z.B. keramischem oder mineralischem Material, aufnimmt.

Die Platte 8b mit dem Rahmen 6b ist in erster Linie gedacht, um Heimwerkern das selbstständige Verlegen von Fliesen als Abdeckung 3c am Trägermodul 2h zu ermöglichen. Für einen allfälligen Höhenausgleich können dabei Auflagen 16 und Stützbleche 7 vorgesehen sein, welch letztere beispielsweise in Nuten 10 (Fig.8b) gehalten sind. Alternativ dazu können auch winkelförmige Stützbleche eingelegt werden, die, sobald sie von oben durch das Gewicht einer Auflage nach unten gedrückt werden, mit dem nach oben abstehenden Winkelteil als Seitstütze fungieren. Ein winkelförmiger Vorsprung 36 dient eventuell auch ohne Stützblech 7 als Anlagefläche.

Im seitlichen Bereich der Temperiervorrichtung kann ein solcher Vorsprung 36 auch verbreitert sein, um die Temperierelemente zu verbergen (siehe strichliert gezeichneter Arm 36a in Fig.8). Die Fig.8a und b zeigen Varianten zum Rahmen 6b der Fig.8, wobei jener von der Fig.8b verkehrt L-förmig ist und gegebenenfalls direkt mit einer Abdeckung 3d an den Oberkanten derselben verbindbar, z.B. verklebbar sein kann. Die strichlierten Linien bei 69 deuten eine von mehreren Hinterschneidungen an, die immer dann vorgesehen sind, wenn der Rahmen 6d mit einer Platte (Abdeckung 3d) ausgegossen ist. Die Hinterschneidung verhindert ein frontseitiges Herausfallen der Platte. Anstelle der Hinterschneidung kann von oben auch ein Fixierelement, z.B. eine Schraube, den Rahmen durchsetzen, um die Platte zu halten.

Fig.9 zeigt eine Variante mit einem Rahmen 6a und einer davon gehaltenen Platte 8a, wobei der Rahmen 6a aus Blechwinkeln geformt ist und insbesondere ebenso wie die Platte 8a für das Aufkleben von Fliesen geeignet ist. Wie nicht dargestellt, können die Wandteile des Rahmens 6a auch Verstrebungen für Versteifungen und Eckverbindungen nach der Art von Bilderrahmen aufweisen. Die Platte 8a verfügt über Temperierelemente 1c, die in sie eingegossen sind. Gleichzeitig ist an der der Wand 4 abgewandten Seite ein weiteres flächiges Temperierelement 1d vorgesehen, das alternativ oder zusätzlich zu dem Temperierelement 1c Wärme erzeugen kann.

Der Klemmteil 48c ist ein Winkelprofil, das - wie schematisch dargestellt - direkt mit einem Halteelement 35c verbunden ist, das an der Wand 4 festgeschraubt ist.

Fig. 10,10a zeigen Trägermodule 2m und n, die in ihrer Geu samtheit aus mehrteiligen Formflächen zusammengesetzt sind.

Fig.11 zeigt einen Ausschnitt aus einem Trägermodul 2q mit aufgeklebter Abdeckung 3c, das an seiner der Wand zugewandten Seite der Platte 8c über eine wellenförmige Ausbildung 62 verfügt, die der erhöhten Konvektionswärmeabgabe dient. Ausserdem sind zwei Temperierelemente 1e und 1f vorgesehen, wie schematisch dargestellt.

Die Ausbildung 62 ist entlang der Wärmekonvektionsrichtung erstreckt, kann aber auch aus Noppen o.dgl. bestehen. Unter gänzlicher Weglassung der Ausbildung 62 ergibt sich eine dünne Platte 8c. Der verbleibende Raum kann isoliert werden oder mit Wärmespeicher- oder Isolationsmaterial aufgefüllt werden.

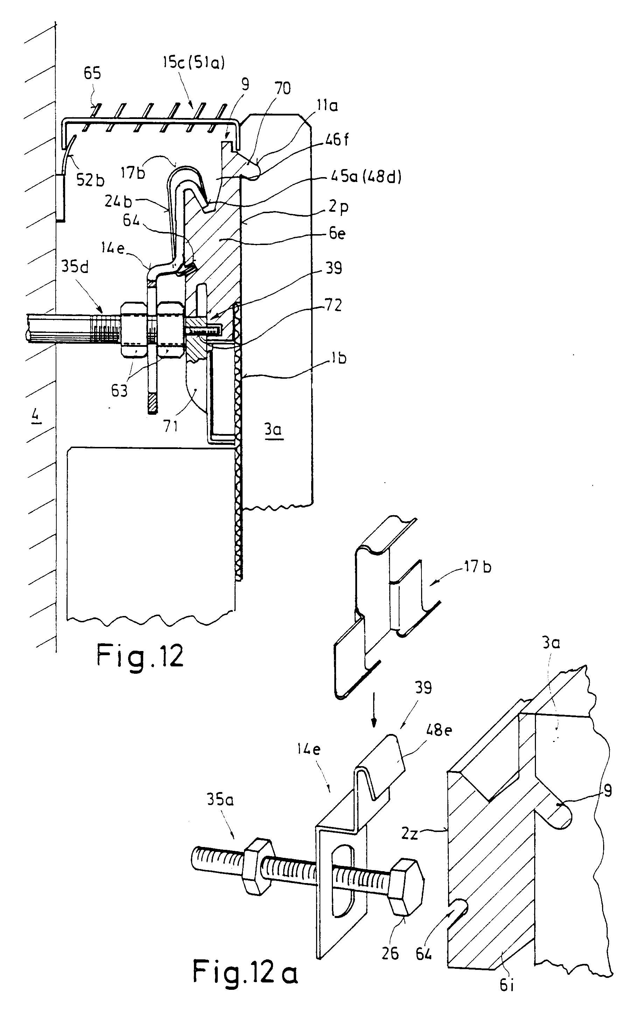

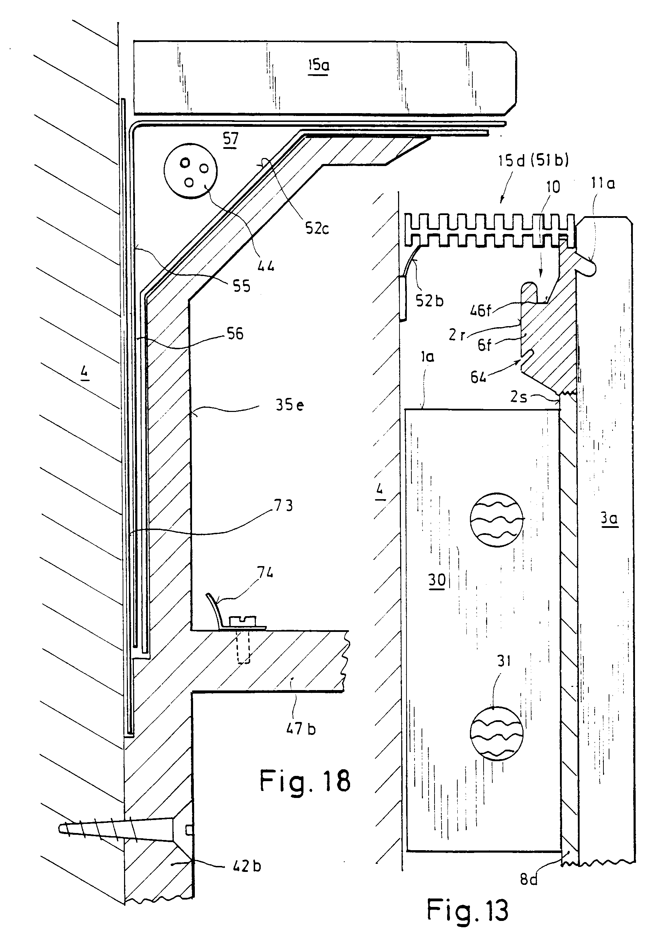

Fig.12 und 13 zeigen ein anderes Befestigungssystem eines Trägermoduls 2p bzw. 2r, das direkt mit der Abdeckung 3a verklebt ist und nur aus einer oberen und einer unteren Leiste besteht. Bei Fig.13 ist zwar die obere und untere Leiste auch noch durch eine Platte 8d verbunden, die mit den Wärmeleitlamellen 30 verklebt ist. Natürlich kann mit dem gleichen Profil auch eine Vollrahmenkonstruktion gebaut sein.

Die Besonderheit bei Fig.12 ist die Wandhalterung 35d, die zwar an sich ein herkömmlicher Schraubbolzen mit zwei Muttern 63 ist, jedoch zusammen mit einer Halteklammer 14e, die mit einer Langlochführung auf der Halterung 35d geführt und von den zwei Muttern 63 positionierbar ist, eine gut funktionierende Variante zu der Befestigung nach Fig.1 darstellt. Dabei dient ein Klemmelement 17b als Montagehilfe, das einerseits in eine weitere Ausnehmung 46f und andererseits in eine unmittelbar benachbarte Parallelnut 64 eingreift. Das Klemmelement 17b verfügt über ein Federglied 24b und hilft somit bis zum endgültigen Festziehen der Muttern 63 das Haltemodul über die Halteklammer 14e zu positionieren. Anstelle der beweglichen Vorsprünge 22 ist hier ein starrer Klammersteg 70 für den Eingriff in die Nut 11a vorgesehen. Der Klammersteg 70 liegt vorzugsweise über der Höhe der Halteklammer 14e.

In der Fig.12a ist durch die Explosionsdarstellung die Funktion der Halteklammer 14e und des Klemmelements 17b, das Huckepack über die Halteklammer 14e gesetzt wird, verdeutlicht.

Die obere Abdeckung 15c (Fig.12) ist als luftdurchlässige Abdeckung 51a ausgebildet, die Leitbleche 65 aufweist, welche in direkter Kooperation mit dem Luftleitblech 52b die Strömrichtung aufsteigender Warmluft beeinflussen. Ein Haltekeil 71 hält in Verbindung mit einer Nut im Rahmen 6e lose oder angeschraubt (72) das Temperierelement 1b und eventuelle Abdeckplatten o.dgl.

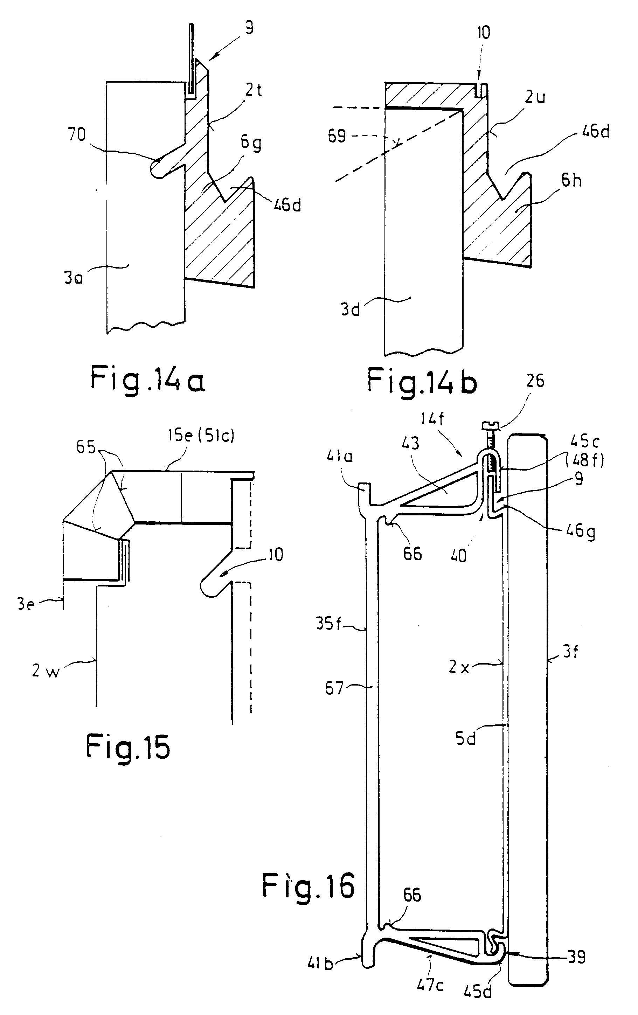

Fig.14a und b zeigen Variationen zu den rahmenförmigen Trägermodulen nach Fig.12 und 13, wobei diese unmittelbar mit den Abdeckplatten 3a bzw. d verbunden sind.

In der Fig.15 sind luftdurchlässige Abdeckengen 51c gezeigt, die seitlich oder oben montierte Zierteile 65 zeigen. Der Unterschied des Halteelementes 35f aus Fig.16 zu den bisher beschriebenen liegt in seiner oberen, schnabelförmigen Ausbildung, die mit einem Haken 45c das Trägermodul 2x, das aus einem gewalzten Blech 5d aufgebaut ist, übergreift und mittels Schraube 26 festspannbar macht. Nocken 66 im Bereich der Rückwand 67 des Halteelementes 35f dienen als Montagehilfe beim Einsetzen eines Temperierelementes.

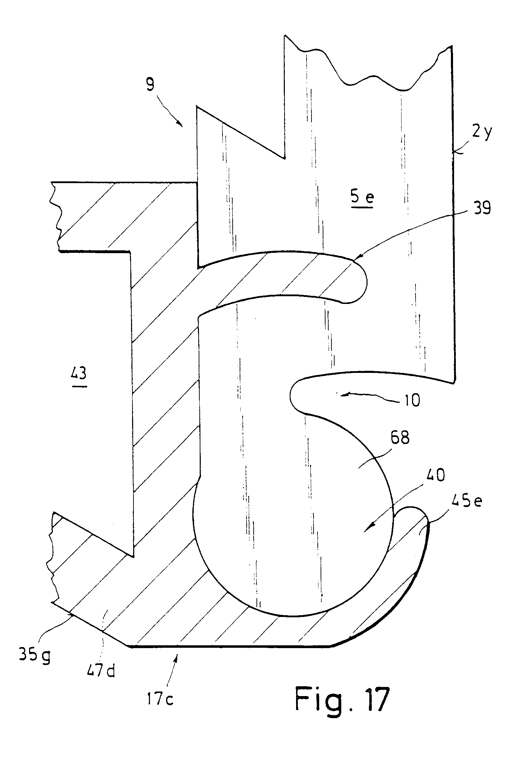

Fig.17 zeigt eine spezielle Ausführungsform eines Halteelementes 35g an seiner Unterseite, wobei dort ein Haken 45e als Gleitscharnier ausgebildet ist und mit einer Ausnehmung 40 den walzenförmigen Unterteil 68 einer Profilschiene 5e aufnimmt. Oberhalb des walzenförmigen Unterteils 68 ist an der Abstützung 47d ein Vorsprung 39 vorgesehen, der in eine gegengleiche Nut der Profilschiene 5e eingreift. Durch diese Ausbildung ist das scharnierartige Verschwenken der Profilschiene 5e möglich. Eine spezielle Neigung des Vorsprunges 39 kann daraus ein Klemmelement 17c machen.
Fig.18 zeigt eine Wandhalterung 42b, die mit einer Abstützung 47b bzw. mit einem Halteelement 35e für das Trägermodul integriert ist. Unterschiedlich zur Variante nach Fig.1 ist die Direktmontage der Wandhalterung am Trägermodul. Ein dünnes Federblech 73 bildet zusammen mit dem segmentartigen Teil 35e die Tasche 56, die wieder ein Luftleitblech 52c aufweist, das auch wärmereflektierend ist. Die Abstützung 47b kann oben oder unten auch eine Klammer 74 aufweisen, die ein Zuleitungskabel hält.

Alle in der Beschreibung als Nuten bezeichneten Ausbildungen können entsprechend ihrer Funktion auch als Vorsprung bzw. Haken ausgebildet sein, soferne die damit korrespondierenden Teile entsprechend gegengleich sind.

### Bezugszeichenliste

- 1: Temperierelement
- 2: Trägermodul
- 3: (flächige) Abdeckung
- 4: Wand
- 5: Profilschiene
- 6: Rahmenkonstruktion
- 7: Profilschiene
- 8: Platte
- 9: Vorsprünge
- 10: Ausnehmungen
- 11: Nut
- 12: Führungsnut
- 13: Führungsstege oder -stifte
- 14: Halteklammer
- 15: (obere) Abdeckung
- 16: Auflage
- 17: Klemmelemente
- 18: Abstützsteg
- 19: Kanäle
- 20: ein Teil
- 21: anderer Teil
- 22: krallenförmiger Vorsprung
- 23: Oberkante des Trägermoduls
- 24: Federglied
- 25:
- 26: Schraube
- 27: Bohrung
- 28: Zapfen oder Steg
- 29: Nuten
- 30: Wärmeleitbleche
- 31: Wasserrohre
- 32: Federnut
- 33: Parallelnut in Abdeckung
- 34: Schlitze
- 35: Halteelement
- 36: Vorsprung
- 37: Fussboden
- 38: Ausnehmung (Wandhalterung)
- 39: Vorsprünge (Halteelement)
- 40: Ausnehmungen (Halteelement)
- 41: weitere Vorsprünge
- 42: Wandhalterung
- 43: Öse
- 44: Leitung
- 45: Haken
- 46: weitere Ausnehmung
- 47: Abstützung
- 48: Klemmteil
- 49: Halteteil
- 50: Zapfen oder Steg horizontal
- 51: luftdurchlässige Abdeckung
- 52: Luftleitblech
- 53: Parallelnut im Träger
- 54: Feder
- 55: abgewinkelte Abdeckung
- 56: Tasche
- 57: Kabelkanal
- 58: plane Auflagefläche
- 59: Halteklammer
- 60: Stege
- 61: Teilhohlräume
- 62: Wellenform
- 63: Muttern
- 64: Parallelnut
- 65: Leitbleche
- 66: Nocken
- 67: Rückwand
- 68: walzenförmiger Unterteil
- 69: Hinterschneidung
- 70: Klammersteg
- 71: Haltekeil
- 72: Schraube
- 73: Federblech

## Patentansprüche

1. Flächige Temperiervorrichtung mit zumindest einem Temperierelement (Heiz- oder Kühlelement) (1), zumindest einer flächigen Abdeckung (3) und zumindest einer Haltevorrichtung, die ein an einer Wand (4) befestigbares Halteelement (35) aufweist, das von der Wand (4) wegragt und wobei die Haltevorrichtung einerseits das Temperierelement (1) und andererseits die Abdeckung (3) trägt und wobei das Temperierelement wenigstens in einem Teilbereich in einem Abstand von der Wand gehalten ist, dadurch gekennzeichnet, dass die Haltevorrichtung eine an der der Wand (4) abgewandten Seite des Halteelementes (35) befestigbare Rahmenkonstruktion (6) oder Profilplatte (2) aufweist, die das Temperierelement (1) und/oder die Abdeckung (3) trägt und beide miteinander in eine Wärmeleitverbindung bringt.

2. Temperiervorrichtung nach Anspruch 1, dadurch gekennzeichnet, dass die Rahmenkonstruktion (6) bzw. die Profilplatte (2) aus einem oder einer Kombination der folgenden Materialien aufgebaut ist:
A) sie besteht aus einer extrudierten Profilschiene (5) (Fig.1,2,4,5,17);
B) sie besteht aus zusammengesetzten, vorzugsweise extrudierten Metall- oder Kunststoffprofilen (7), welch letztere gegebenenfalls glasfaserverstärkt sind (Fig.8 bis 10,12 bis 15);
C) sie besteht aus keramischen oder mineralischem Material (8), das vorzugsweise von einem Material eingerahmt ist, das gegebenenfalls einen ähnlichen Wärmedehnungsquoifizienten wie das keramische oder mineralische Material aufweist (Fig.8,9,11,14).

3. Temperiervorrichtung nach Anspruch 2, dadurch gekennzeichnet, dass die Rahmenkonstruktion (6) bzw. die Profilplatte (2) - im vorzugsweise oberen und unteren - Randbereich hakenförmige durchgehende Vorsprünge und/oder nutenförmige Ausnehmungen (10) aufweist, die mit der Abdekkung (3) mittelbar oder unmittelbar - gegebenenfalls durch gegengleiche Ausbildungen an den Randbereichen der Abdeckung (3) - in Klemmverbindung bringbar sind. Fig.1,2,4,5,8-10,12-17).

4. Temperiervorrichtung nach Anspruch 3, dadurch gekennzeichnet, dass die Vorsprünge (9) bzw. Ausnehmungen (10) eine oder mehrere der folgenden Ausbildungen aufweisen:
A) Sie sind im Schnitt sowohl oben wie auch unten schwalbenschwanzförmig;
B) sie sind zumindest unten hakenförmig und springen in eine gegengleiche Nut (11) der Abdeckung (3) (Fig.1,2,4,5,12-14);
C) sie bilden vertikale Führungsnuten (12) für Führungsstege oder - Stifte (13) von heute (14) (Fig.2,4,8,14);
D) sie bilden eine plane Auflagefläche (58) für obere Abdeckungen (15) oder Auflagen (16) (Fig.8-10,14,15);
E) sie bilden benachbarte, druckkompensierende Angriffsflächen für klauenförmige Klemmelemente (17) (Fig.1,17);
F) sie bestehen oben aus einer Gewindebohrung für das Zusammenwirken mit einer Halteschraube.

5. Temperiervorrichtung nach Anspruch 3 oder 4, dadurch gekennzeichnet, dass für die Klemmverbindung zwischen der Profilplatte (2) und der Abdeckung (3) ein mehrteiliges Klemmelement (17) vorgesehen ist, von dem ein Teil (20) mit der der Wand (4) zugewandten Seite der Profilplatte (2) verbunden ist und ein anderer Teil (21) mit einem krallenförmigen Vorsprung (22) die Oberkante (23) der Profilplatte (2) übergreifend in eine gegengleiche Nut (11) in der dem Trägermodul (2) zugewandten Seite der Abdeckung (3) klemmend eingreift (Fig.1-3).

6. Temperiervorrichtung nach Anspruch 5, dadurch gekennzeichnet, dass das Klemmelement (17) wenigstens eines der folgenden Merkmale aufweist:
A) die zwei Teile (20, 21) sind durch ein Federglied (24) verbunden oder als einstückige Federklemme ausgebildet (Fig.3);
B) die zwei Teile (20, 21) sind durch eine Schraube (26) verbindbar (Fig.1-3);
C) die zwei Teile (20, 21) weisen zumindest eine Parallelführung zueinander auf, die vorzugsweise aus einer Bohrung oder Nut (27) an einem Teil (20) und einem Zapfen oder Steg (28) am anderen Teil (21) besteht (Fig.1,3);
D) die Verbindung des einen Teils mit dem Trägermodul erfolgt über ein Gewinde und eine Gewindebohrung in der oberen Kante des Trägermoduls;
E) die Verbindung des einen Teils (20) mit dem Trägermodul erfolgt über eine Schwalbenschwanz-Federnut (32) oder dergleichen (Fig.1);
F) der andere Teil (21) verfügt über eine Parallelführung zur Profilplatte (2) - wobei er vorzugsweise einen vertikalen Steg (28) aufweist, der in einer vertikalen Bohrung oder einer Parallelnut (33) in der Oberkante (23) des Trägermoduls (2) eingreift (Fig.1,2).

7. Temperiervorrichtung nach einem der vorhergehenden Ansprüche, dadurch gekennzeichnet, dass das Temperierelement (1) an die wandseitige Fläche der Rahmenkonstruktion (6) bzw. Profilplatte (2) angepresst - vorzugsweise angeklebt - oder mit dieser integriert ausgebildet ist.
(Fig.1,2,4,5,9,11 bis 13)

8. Temperiervorrichtung - mit einem vorzugsweise folienartigen - Temperierelement (1) nach einem der Ansprüche 1 bis 6, dadurch gekennzeichnet, dass das Temperierelement (1) zwischen der Rahmenkonstruktion (6) bzw. Profilplatte (2) und der Abdeckung (3) klemmbar ist, wobei die Rahmenkonstruktion (6) bzw. Profilplatte (2) vorzugsweise über zwei einander gegenüberliegende Schlitze (34) im Randbereich verfügt, die das Temperierelement (1) aufnehmen und klemmpositioniert halten. (Fig.2,4,12)

9. Temperiervorrichtung nach Anspruch 7 und 8, dadurch gekennzeichnet, dass zwei Temperierelemente (1) vorgesehen sind, die vorzugsweise an der wandseitigen und abdeckseitigen Fläche der Rahmenkonstruktion (6) bzw. Profilplatte (2) montiert oder mit diesem integriert sind.

10. Temperiervorrichtung nach einem der vorhergehenden Ansprüche, dadurch gekennzeichnet, dass zur Halterung der Rahmenkonstruktion (6) bzw. Profilplatte (2) Halteelemente (35) aus Profilmaterial vorgesehen sind, die im oberen und unteren Bereich Vorsprünge (39) oder Ausnehmungen (40) aufweisen, die mit gegengleichen Ausnehmungen oder Vorsprüngen der Rahmenkonstrukion (6) bzw. Profilplatte (2) mittelbar oder unmittelbar verbindbar sind.
(Fig.1,5,6,9,12,16-18);

11. Temperiervorrichtung nach Anspruch 10, dadurch gekennzeichnet, dass das Halteelement (35) eines oder mehrere der folgenden Merkmale aufweist:
A) es verfügt in seinem unteren Bereich über einen Fuss zur distanzrichtigen Abstützung, z.B. auf einem Fussboden (37);
B) es verfügt im Bereich seiner der Wand (4) zugewandten Seite über weitere Vorsprünge (41) oder Nuten, die in gegengleiche Ausnehmungen (38) oder Vorsprünge einer Wandhalterung (42) einschiebbar oder einklappbar sind, wobei letztere vorzugsweise herkömmlich an die Wand (4) angedübelt ist und gleichzeitig als Wärmereflektor und/oder Isolator dient (Fig.1);
C) es ist aus einem - vorzugsweise stranggepressten - Profil gefertigt und weist mindestens eine Öse (43), z.B. zur Halterung und Führung von Leitungen (44) oder Kabeln - auf (Fig.1,16,17);
D) es verfügt im oberen und unteren Bereich über zumindest je einen Haken (45) für das Zusammenwirken mit gegengleichen weiteren Ausnehmungen in der Profilplatte (2), die zueinander gebogen und verspannbar sind (Fig.1,5);
E) es verfügt im unteren Teil über eine Abstützung (47) für die Profilplatte (2) (Fig.1,16-18);
F) es ist im oberen Teil mehrteilig, derart, dass ein hakenförmiger Klemmteil (48) mit einer gegengleichen weiteren Ausnehmung (46) in die Profilplatte (2) verspannbar ist, wobei in Nachbarschaft zum Klemmteil (48) an einem Halteteil (49) ein - vorzugsweise etwa horizontaler - Zapfen oder Steg (50) vorgesehen ist, der in eine gegengleiche Parallelnut (53) in der Profilplatte (2) eingreift, derart, dass beim Anspannen des Klemmteiles (48) in der Profilplatte (2) nur der Bereich zwischen Klemmteil (48) und Zapfen bzw. Steg (50) spannbar ist und eine Abstützung (47) im unteren Teil des Halteelements (35) spanndruckfrei relativ zum oberen Teil gehalten ist (Fig.1);
G) es verfügt über eine Feder (54), die den Klemmteil (48) beaufschlagt (Fig.1,6).

12. Temperiervorrichtung nach einem der vorhergehenden Ansprüche, dadurch gekennzeichnet, dass sie an ihrer Oberseite eine luftdurchlässige Abdeckung (51) aufweist, die vorzugsweise mit einem Luftleitblech (52) einer Wandhalterung (42) zusammenwirkt. (Fig. 12)

13. Temperiervorrichtung nach einem der vorhergehenden Ansprüche, dadurch gekennzeichnet, dass die Wandhalterung (42) eine abgewinkelte, abnehmbare Abdeckung (59) aufweist, die in eine nutförmige Tasche (56) einschiebbar ist, wobei die Tasche (56) vorzugsweise von einem gekrümmten Luftleitblech (52) begrenzt ist, an dessen Oberseite ein Kabelkanal (57) freigestellt ist (Fig.1,18)

## Claims

1. A flat temperature-regulating device having at least one temperature-regulating element (heating or cooling element) (1), at least one flat cover (3) and at least one holding device with a holding element that can be fastened to a wall and projects away from said wall, the holding device supporting on the one hand the temperature-regulating element (1) and on the other hand the cover (3), and the temperature-regulating element being held, at least in one section, a distance away from the wall, wherein the holding device has a frame construction (6) or profiled plate (2) which can be fastened to that side of the holding element (35) facing away from the wall (4) and which supports the temperature-regulating element (1) and/or the cover (3) and establishes a thermally conducting connection between the two.

2. A temperature-regulating device as claimed in claim 1, wherein the frame construction (6) or the profiled plate (2) consists of one of the following materials or a combination of the following materials:
A)it consists of an extruded profiled rail (5) (Fig. 1, 2, 4, 5, 17);
B)it consists of assembled, preferably extruded, metal or plastic profiles (7), the latter may be glass fiber-reinforced (Fig.8 to 10, 12 to 15);
C)it consists of a ceramic or mineral material (8) which is preferably framed by a material which has a thermal expansion coefficient that may be similar to that of the ceramic or mineral material (Fig.8, 9, 11, 14).

3. A temperature-regulating device as claimed in claim 2, wherein the frame construction (6) or the profiled plate (2) has hook-like continuous projections and/or groove-like recesses (10) in the edge regions - preferably in the upper and lower edge regions - which can be caused to form a direct or indirect clamped connection with the cover (3) - optionally by matching constructions in the edge regions of the cover (3) (Fig.1, 2, 4, 5, 8 to 10, 12 to 17).

4. A temperature-regulating device as claimed in claim 3, wherein the projections (9) or recesses (10) have one or more of the following embodiments:
A) the top and the bottom have a swallowtail-like section;
B)they are hook-shaped, at least at the bottom, and snap into a matching groove (11) in the cover (3) (Fig.1, 2, 4, 5, 12 to 14);
C)they form vertical guide grooves (12) for guide webs or guide pins (13) of retaining clips (14) (Fig.2, 4, 8, 14);
D)they form a flat support surface (58) for upper covers (15) or supports (16) (Fig.8 to 10, 14, 15);
E)they form adjacent, pressure-compensating attack surfaces for claw-shaped clamping elements (17) (Fig. 1, 17);
F)they consist of a threaded hole for cooperation with a holding screw.

5. A temperature-regulating device as claimed in claim 3 or 4, wherein a multi-part clamping element (17) is provided for the clamp connection between the profiled plate (2) and the cover (3), one part of the clamping element being connected to the side of the profiled plate facing the wall and another part having a crawlike projection overlapping the upper edge of the profiled plate and engaging and wedging in a matching groove in that side of the cover that faces the profiled plate.

6. A temperature-regulating device as claimed in claim 5, wherein the clamping element (17) has at least one of the following features:
A) The two parts (20,21) are connected by a spring member (24) or they are formed as a one-piece spring clamp (Fig.3);
B)The two parts (20,21) can be connected by a screw (26) (Fig.1-3);
C)The two parts (20,21) have at least one guide parallel to one another, which preferably consists of a hole or groove (27) on one part and a peg or web (28) on the other part (21) (Fig.1,3);
D)One part (20) is connected to the carrier module via a thread and a threaded hole in the upper edge of the carrier module;
E)one part (20) is connected to the carrier module via a swallowtail spring groove (32) or the like (Fig.1);
F)The other part (21) has a parallel guide for the profiled plate (2) - preferably having a vertical web (28) which engages a vertical hole or a parallel groove (33) in the upper edge (23) of the carrier module (2) (Fig.1, 2);

7. A temperature-regulating device as claimed in any of the preceding claims, wherein the temperature-regulating element (1) is pressed against - preferably stuck to - the wall-facing surface of the frame construction (6) or profiled plate (2) or is formed integrally therewith (Fig.1, 2, 4, 5 9, 11 to 13).

8. A temperature-regulating device having a - preferably foil-like - temperature-regulating element (1) and as claimed in any of claims 1 to 6, wherein the temperature-regulating element (1) can be clamped between the frame construction (6) or profiled plate (2) and the cover (3), the frame construction (6) or profiled plate (2) preferably having two slots (34) in the edge region which are opposite one another and which receive the temperature-regualting element (1) and hold it clamped in position (Fig.2, 4, 12).

9. A temperature-regulating device as claimed in claims 7 and 8, wherein two temperature-regulating elements (1) are provided which are preferably mounted on the wall-facing and cover-facing surface or the frame construction (6) or profiled plate (2) or are integrated therewith.

10. A temperature-regulating device as claimed in any of the preceding claims, wherein, in order to hold the frame construction (6) or profiled plate (2), holding elements (35) of profiled material are provided which have, in the upper and lower regions, projections (39) or recesses (40) which can be connected directly or indirectly to matching recesses or projections of the frame construction (6) or profiled plate (2) (Fig.1, 5, 6, 9, 12, 16-18).

11. A temperature-regulating device as claimed in claim 10, wherein the holding element (35) has one or more of the following features:
A)It has, in its lower region, a foot for supporting the device and for providing the correct distance with respect to e.g. a floor (37);
B)It has, in the region of its side facing the wall (4), further projections (41) or grooves which can be inserted of swivelled into matching recesses (38) or projections of a wall holder (42), the latter being fixed to the wall (4) preferably by means of plugs in a conventional manner and at the same time servig as a heat reflector and/or insulator (Fig.1);
C)It is made of a - preferably extruded - profile and has at least one lug (43), for example for holding and guiding pipes (44) or cables (Fig.1, 16, 17);
D)It has, in each of the upper and lower regions, at least one hook (45) for cooperation with matching further recesses in the profiled plate (2), the hooks can be bent toward one another and braced (Fig.1, 5);
E)It has, in the lower part, a support (47) for the profiled plate (2) (Fig. 1, 16-18);
F)the lower part has a plurality of constituent elements so that a hook-like clamping part can be braced with a further matching recess (46) in the profiled plate (2), a - preferably approximately horizontal - peg or web (50) being provided in the neighborhood of the clamping part (48) on the holding part (49), which peg or web engages a matching parallel groove (53) in the profiled plate (2) in such a manner that, on tightening the clamping part (48) in the profiled plate (2), only the region between the clamping part (48) and the peg or web (50) can be clamped, and a support (47) in the lower part of the holding element (35) is held without clamping pressure relative to the upper part (Fig.1);
G)has a spring (54) which interacts with the clamping part (48) (Fig.1, 6).

12. A temperature-regulating device as claimed in any of the preceding claims, which has, at its top, an air-permeable cover (51) which preferably cooperates with an air baffle plate (52) of a wall holder (42) (Fig.12).

13. A temperature-regulating device as claimed in any of the preceding claims, wherein the wall holder (42) has an angled, removable cover (59) which can be inserted into a groove-like pocket (56), the pocket (56) preferably being bounded by a curved air baffle plate (52), with a cable duct (57) being left free on the upper side of said plate (52).

## Revendications

1. Dispositif d'équilibrage de température à action de surface, avec au moins un élément d'équilibrage de température (élément chauffant ou refroidissant) (1), au moins un recouvrement (3) planiforme et au moins un dispositif de maintien, présentant un élément de fixation (35) susceptible d'être fixé sur une paroi (4) et s'écartant de la paroi (4) et le dispositif de maintien portant, d'une part, l'élément d'équilibrage de température (1) et, d'autre part, le recouvrement (3) et l'élément d'équilibrage de température étant fixé au moins dans une zone partielle, à distance de la paroi, caractérisé en ce que le dispositif de maintien présente une construction en cadre (6) ou plaque profilée (2), susceptible d'être fixée sur la face, opposée à la paroi (4), de l'élément de fixation (35) et portant l'élément d'équilibrage de température (1) et/ou le recouvrement (3) et les plaçant les deux en liaison de conduction de chaleur l'un avec l'autre.

2. Dispositif d'équilibrage de température selon la revendication 1, caractérisé en ce que la construction en cadre (6), respectivement la plaque profilée (2) est composée d'un matériau, ou d'une combinaison de matériau, parmi les suivants :
A) elle est composée d'une glissière profilée (5) extrudée (figures 1, 2, 4, 5, 17);
B) elle est composée de profilés métalliques ou en matière plastique (7), assemblés, de préférence extrudés, ces dernières étant, le cas échéant, renforcés par des fibres de verre (figure 8 à 10, 12 à 15);
C) elle est composée d'un matériau (8) céramique ou minéral, encadré de préférence par un matériau présentant, le cas échéant, un coefficient de dilatation thermique semblable à celui du matériau céramique ou minéral (figures 8, 9, 11, 14).

3. Dispositif d'équilibrage de température selon la revendication 2, caractérisé en ce que la construction en cadre (6), respectivement la plaque profilée (2) présente dans les zones marginales - de préférence supérieure et inférieure - des saillies continues en forme de crochets et/ou des évidements (10) en forme de rainures susceptible d'être placés en liaisons de serrage avec le recouvrement (3), indirectement ou directement - le cas échéant grâce à des formes parfaitement conjuguées sur les zones marginales du recouvrement (3). Figures 1, 2, 4, 5, 8 à 10, 12 à 17.

4. Dispositif d'équilibrage de température selon la revendication 3, caractérisé en ce que les saillies (9), respectivement les évidements (10) présentent l'une ou plusieurs des configurations suivantes :
A) elles (ils) ont une forme en queue d'aronde, tant en partie haute qu'en partie basse;
B) elles (ils) sont en forme de crochets, au moins en partie basse, et se projettent dans une rainure (11) parfaitement conjuguée du recouvrement (3) (figures 1, 2, 4, 5, 12 à 14);
C) elles (ils) forment des rainures de guidages (12) verticales destinées à des nervures ou des tiges de guidages (13), depuis (14) (figures 2, 4, 8, 14);
D) elles (ils) forment une surface d'appui (48) plane pour les recouvrements (15) ou appuis (16) supérieurs (figures 8 à 10, 14, 15);
E) elles (ils) forment des surfaces de prise voisines, de compensation de la pression, pour des éléments de serrage (17) en forme de griffes (figures 1, 14);
F) elles (ils) sont composé(e)s en partie haute d'un trou taraudé destiné à la coopération avec une vis de maintien.

5. Dispositif d'équilibrage de température selon la revendication 3 ou 4, caractérisé en ce que, pour la liaison à serrage entre la plaque profilée (2) et le recouvrement (3) est prévue un élément de serrage (17) en plusieurs parties, dont une partie (20) est reliée à la face, tournée vers la paroi (4) de la plaque profilée (2), et une autre partie (21) s'engage avec serrage, par une saillie (22) en forme de crampon, en saisissant par le dessus l'arête supérieure (23) de la plaque profilée (2) dans une rainure (11) parfaitement conjuguée, réalisée dans la face, tournée vers la plaque profilée (2), sur recouvrement (3) (figures 1 à 3).

6. Dispositif d'équilibrage de température selon la revendication 1, caractérisé en ce que l'élément de serrage (17) présente au moins l'une des caractéristiques suivantes :
A) les deux parties (20, 21) sont reliées par un organe élastique (24) ou réalisées sous forme d'une pince élastique monopièce (figure 3);
B) les deux parties (20, 21) sont susceptibles d'être reliées au moyen d'une vis (26) (figures 1 à 3);
C) les deux parties (20, 21) présentent au moins un guidage parallèle, l'une par rapport à l'autre, composé de préférence d'un perçage ou d'une rainure (27), réalisé(e) sur une partie (20), et d'un tourillon ou d'une nervure (28), réalisé(e) sur l'autre partie (21) (figures 1, 3);
D) la liaison d'une première partie avec le module support s'effectue par l'intermédiaire d'un filetage et d'un trou taraudé réalisé dans le bord supérieur du module support;
E) la liaison d'une première partie (20) avec le module support s'effectue par l'intermédiaire d'une rainure de clavette à profil en queue d'aronde (32) ou analogue (figure 1);
F) l'autre partie (21) dispose d'un guidage parallèle par rapport à la plaque profilée (2) - en présentant de préférence une nervure (28) verticale s'engageant dans un perçage vertical ou une rainure parallèle (33) réalisée dans la bordure supérieure (23) du module support (2) (figures 1, 2);

7. Dispositif d'équilibrage de température selon l'une des revendications précédentes, caractérisé en ce que l'élément d'équilibrage de température (1) est pressé sur la surface, côté paroi, de la construction en cadre (6) respectivement de la plaque profilée - de préférence en étant collé sur elle - ou bien réalisé d'un seul tenant avec elle (figures 1, 2, 4, 5, 9, 11 à 13)

8. Dispositif d'équilibrage de température - avec un élément d'équilibrage de température 1 - de préférence réalisé sous forme de feuille - selon les revendications 1 à 6, caractérisé en ce que l'élément d'équilibrage de température (1) est susceptible d'être serré entre la construction en cadre (1), respectivement de la plaque profilée (2) et le recouvrement (3), la construction en cadre (6) respectivement de la plaque profilée disposant de préférence, dans la zone de bordure, de deux fentes (34) opposées l'une à l'autre, recevant l'élément d'élément d'équilibrage de température (1) et le maintenant en position avec serrage (figure 2, 4, 12).

9. Dispositif d'équilibrage de température selon les revendications 7 et 8, caractérisé en ce que deux éléments d'équilibrage de température (2) sont prévus, de préférence montés sur, ou intégrés, à la surface, située du côté de la paroi et du côté du recouvrement de la construction en cadre (6), respectivement de la plaque profilée (2).

10. Dispositif d'équilibrage de température selon l'une des revendications précédentes, caractérisé en ce que, pour maintenir la construction en cadre (6), respectivement la plaque profilée (2), sont prévus des éléments de maintien (3) en matériaux profilés, présentant, dans les zones supérieure et inférieure, des saillies (39) ou des évidements (40), susceptibles d'être reliés indirectement ou directement à des évidements ou saillies, parfaitement conjugués, de la construction en cadre (6) respectivement de la plaque profilée (2) (figures 1, 5, 6, 9, 12, 16 à 18)

11. Dispositif d'équilibrage de température selon la revendication 10, caractérisé en ce que l'élément de maintien (35) présente l'une ou plusieurs des caractéristiques suivantes :
A) il dispose dans sa zone inférieure d'un pied destiné à lui fournir un appui, à distance correcte, par exemple sur un plancher (37);
B) il dispose, dans la zone de sa face tournée vers la paroi (4), d'autres saillies (41) ou rainures, pouvant être insérées ou rabattues dans des évidements (38) ou saillies, parfaitement conjugué(e)s, d'une fixation de paroi (42), ces derniers ou dernières étant de préférence chevillés antérieurement sur la paroi (4) et faisant simultanément office de réflecteur de chaleur et/ou d'isolant (figure 1);
C) il est fabriqué à partir d'un profilé - de préférence obtenu par extrusion - et présente au moins un oeillet (43), par exemple à des fins de fixation et de guidage de conduites (44) ou de câbles (figures 1, 16, 17):
D) il dispose, dans les zones supérieure et inférieure, d'au moins chaque fois un crochet (45), pour la coopération avec d'autres évidements, parfaitement conjugués, réalisés dans la plaque profilée (2), les crochets étant courbés les uns vers les autres et susceptibles d'être serrés (figures 1 et 5);
E) il dispose en partie inférieure d'un appui (47) destiné à la plaque profilée (2) (figures 1, 16 à 18);
F) il est réalisé en partie supérieure en plusieurs parties, de manière à ce qu'une partie de serrage (48) en forme de crochet, portant un autre évidement (46) parfaitement conjugué, puisse être serrée dans la plaque profilée (2), un tourillon ou une nervure (50) - de préférence à peu près horizontal(e) - étant prévu(e) au voisinage de la partie de serrage (48), sur une partie de fixation (49) et s'engage dans une rainure (53) parallèle, à forme conjuguée, réalisée dans la plaque profilée (2), de manière que, lors du serrage de la partie de serrage (48) dans la plaque profilée (2) seule la zone située entre la partie de serrage (48) et le tourillon ou la nervure (50) puisse être serrée et un appui (47) réalisé dans la partie inférieure de l'élément de fixation (35) étant maintenu, sans pression de serrage, par rapport à la partie supérieure (figure 1);
G) il dispose d'un ressort (54) agissant sur la partie de serrage (48) (figures 1, 6).

12. Dispositif d'équilibrage de température selon l'une des revendications précédentes, caractérisé en ce qu'il présente en face supérieure un recouvrement (51) perméable à l'air, coopérant de préférence avec une tôle de guidage d'air (532) d'une fixation de paroi (42). (figure 12).

13. Dispositif d'équilibrage de température selon l'une des revendications précédentes, caractérisé en ce que la fixation de paroi (42) présente un recouvrement (59) amovible, replié, pouvant être inséré dans une poche (56) en firme de rainure, la poche (56) étant de préférence délimitée par une tôle de guidage d'air (52) incurvée, en face supérieure de laquelle est dégagé un canal de câble (figures 1, 18).
